# EUROPÄISCHE PATENTSCHRIFT

(11) **EP 2 754 699 B1**
(45) Veröffentlichungstag und Bekanntmachung des Hinweises auf die Patenterteilung: **18.05.2016**
(21) Anmeldenummer: 13000114.2
(22) Anmeldetag: 10.01.2013
(51) Int. Cl.: C09D 5/00

(54) **Beschichtungsstoffbasis für eine, insbesondere matte, Anstrichfarbe, insbesondere für eine Fassadenfarbe, sowie eine, insbesondere matte, Anstrichfarbe, insbesondere Fassadenfarbe, enthaltend diese Beschichtungsstoffbasis, und Farbanstrich erhalten mit dieser, insbesondere matten, Anstrichfarbe**
Coating material basis for an in particular matte paint, in particular for a facade paint, and an, in particular mat, paints, in particular facade paint, comprising this coating material basis, and coat of paint obtained with this, in particular matte, paint
Base de revêtement pour une peinture, notamment matte, en particulier pour une couleur de façade, ainsi qu'une peinture, notamment matte, en particulier pour une couleur de façade contenant cette base de revêtement et peinture contenant cette peinture, notamment matte

(43) Veröffentlichungstag der Anmeldung: 16.07.2014
(73) Patentinhaber: DAW SE, 64372 Ober-Ramstadt (DE)
(72) Erfinder: Befurt, Uwe, 64372 Ober-Ramstadt (DE); Becker, Daniel, 64367 Mühltal (DE); Brenner, Thomas, Dr., 64367 Mühltal (DE)
(74) Vertreter: Metten, Karl-Heinz

(56) Entgegenhaltungen:
- WO-A1-2009/129760
- DE-A1- 1 519 232
- DE-A1- 3 113 136
- US-A1- 2006 167 131
- US-A1- 2007 054 122
- US-A1- 2011 281 978

## Beschreibung

Die vorliegende Erfindung betrifft eine Beschichtungsstoffbasis für eine, insbesondere matte, Fassaden- oder Anstrichfarbe, eine, insbesondere matte, Fassaden- oder Anstrichfarbe enthaltend diese Beschichtungsstoffbasis, einen, insbesondere matten, Farb- oder Fassadenanstrich enthaltend oder erhalten mit dieser Anstrichfarbe sowie die Verwendung der Beschichtungsstoffbasis für den Einsatz als oder für die Herstellung einer Fassadenfarbe.

Anstrichfarben lassen sich unter anderem unterteilen in matte und glänzende Anstrichfarben. Matte Anstrichfarben sind in der Regel weniger reflektierend als glänzende Anstrichfarben. Die Norm DIN EN 13 300 kennt zum Beispiel die vier Glanzabstufungen glänzend, mittlerer Glanz, matt und stumpfmatt, wobei der Glanzgrad "mittlerer Glanz" ebenfalls die häufig verwendeten Einstufungen "seidenmatt" und "seidenglänzend" mit umfassen soll. Insbesondere bei Farbanstrichen aus matten Anstrichfarben besteht eine größere Neigung zu Abriebstellen. In diesem Zusammenhang spricht man auch häufig von dem sogenannten Schreibeffekt. Diese nachteilige Eigenschaft von insbesondere matten Farbanstrichen zeigt sich besonders ausgeprägt bei dunklen Farben, weshalb sich insbesondere auch im Bereich der Fassadenanstriche dunkle, matte Farben bislang nicht durchgesetzt haben. Denn bei herkömmlichen matten Fassadenfarben führen häufig schon geringe mechanische Belastungen wie einfache Berührungen zu nicht mehr rückgängig zu machenden Markierungen auf der Oberfläche.

Gemäß der DE 1 519 232 sollen sich verbesserte diffus-reflektierende Überzugsmittel auf der Basis eines Gemisches aus durchsichtigem Lack und Pigmenten dadurch erhalten lassen, dass man gefärbte Pigmentagglomerate mit einem Durchmesser von 2 µm bis 70 µm verwendet, die aus einem mit einem durchsichtigen, in dem Firnisträger unlöslichen silikatischen Bindemittel verbundenen Pigmentpulver einer Teilchengröße unterhalb 2 µm aufgebaut sind. Hierbei darf praktisch kein Unterkorn mit einem Durchmesser von weniger als 2 µm in dem Überzugsmittel vorliegen.

Aus der DE 31 13 136 A1 ist ein Material zum Beschichten von Mauerwerk und Beton bekannt, das im Wesentlichen aus organischem Bindemittel, Pigment und Füllstoff besteht. Werden mindestens 25 Gew,-% des Füllstoffanteils in Form fein zerteilten Glases mit einer Kerngröße von ca. 0,1 bis 200 µm verwendet, soll man auch bei Fassadefarben zu einem gleichmäßigen Farbeindruck gelangen, und zwar unabhängig davon, ob der Untergrund unterschiedliche Eigenfarben und/oder unterschiedliche Saugeigenschaften aufweist.

Für das Problem der Erzeugung von Glanzstellen bei mechanischer Beanspruchung, insbesondere bei matten Farben liefert der Stand der Technik jedoch keine Lösung. Bislang konnte man derartig in Mitleidenschaft gezogene Stellen nur durch einen Neuanstrich reparieren.

Es wäre wünschenswert, auf Fassaden- oder Anstrichfarben, insbesondere matte Fassaden- oder Anstrichfarben, zurückgreifen zu können, die weniger stark ausgeprägt oder gar nicht mehr bei mechanischer Beanspruchung den sogenannten Schreibeffekt zeigen.

Der vorliegenden Erfindung lag daher die Aufgabe zugrunde, Fassaden- oder Anstrichfarben zur Verfügung zu stellen, die nicht mehr mit den Nachteilen des Stands der Technik behaftet sind und die insbesondere matte Farben, insbesondere mit hoher Brillanz, ermöglichen, ohne gleichzeitig bei mechanischer Beanspruchung einen irreversiblen Schreibeffekt zu zeitigen.

Darüber hinaus lag der vorliegenden Erfindung die Aufgabe zugrunde, Zusammensetzungen für Fassaden- oder Anstrichfarben zu finden, mit denen sich das Verschleiern durch Kalkausblühungen verhindern bzw. zurückdrängen lässt.

Ferner lag der Erfindung die Aufgabe zugrunde, Zusammensetzungen für Fassaden- oder Anstrichfarben zu finden, welche eine geringe Wasseraufnahme zeigen.

Schließlich lag der Erfindung die Aufgabe zugrunde, zu Fassaden- oder Anstrichfarben zu gelangen, mit denen sich die Bildung von sogenannten Emulgatorläufen eliminieren lässt.

Demgemäß wurde eine Beschichtungsstoffbasis gemäß Patentanspruch 1 für eine, insbesondere matte, Fassaden- oder Anstrichfarbe, enthaltend Füllstoffe, gefunden, umfassend massive sphärische Partikel, mit einem durchschnittlichen (mittleren) Durchmesser im Bereich von 50 µm bis 200 µm, sowie Bindemittel, umfassend mindestens ein Bindemittelpolymer. Die massiven sphärischen Partikel, mit einem durchschnittlichen (mittleren) Durchmesser im Bereich von 50 µm bis 200 µm stellen dabei eine erste Füllstoffkomponente dar. Daneben liegen auch noch weitere Füllstoffkomponenten in der erfindungsgemäßen Beschichtungsstoffbasis vor. Letztere haben dabei nicht notwendigerweise in sphärischer Form vorzuliegen, während dieses für die erste Füllstoffkomponente die bevorzugte Ausführungsform ist.

Unter einer Partikelgröße eines nicht sphärischen Partikels kann im Sinne der vorliegenden Erfindung ein so genannter Äquivalentdurchmesser verstanden werden. Bestimmt man beispielsweise den Partikeldurchmesser mit Hilfe eines Siebes, legt die Kantenlänge der quadratischen Löcher des Siebens fest, welche Partikel durch das Sieb hindurchgelassen werden und welche nicht. Daneben kann der Äquivalentdurchmesser bei Partikeln, deren Durchmesser sich aufgrund ihrer Größe nicht mehr mit der Siebmethode bestimmen lässt, als aerodynamischer Durchmesser ermittelt werden. Hier werden die Fallgeschwindigkeiten in Luft mit der einer Kugel mit definiertem Durchmesser verglichen.

Unter einer Fassadenfarbe im Sinne der vorliegenden Erfindung soll eine Außenfarbe verstanden werden.

Die erfindungsgemäße Beschichtungsstoffbasis umfasst mindestens einen silikatischen Füllstoff als weitere (zweite) Füllstoffkomponente.

Dabei kann in einer Ausführungsform vorgesehen sein, dass die Füllstoffe in der Beschichtungsstoffbasis in einer Menge im Bereich von 55 bis 95 Gew.-%, vorzugsweise im Bereich von 60 bis 92 Gew.-% und insbesondere im Bereich von 63 bis 90 Gew.-% oder 70 bis 90 Gew.-%, und/oder dass darin Bindemittel im Bereich von 5 bis 45 Gew.-%, vorzugsweise 8 bis 40 Gew.-% und insbesondere im Bereich von 10 bis 30 Gew.-% vorliegen.

In einer weiteren Ausführungsform der Beschichtungsstoffbasis ist vorgesehen, dass die sphärischen Partikel darin in einer Menge im Bereich von 5 bis 50 Gew.-%, vorzugsweise im Bereich von 10 bis 45 Gew.-% und insbesondere im Bereich von 15 bis 40 Gew.-%, und/oder dass die silikatischen Füllstoffe darin in einer Menge im Bereich von 5 bis 60 Gew.-%, vorzugsweise im Bereich von 10 bis 50 Gew.-% und insbesondere im Bereich von 15 bis 45 Gew.-%, vorliegen.

In besonders vorteilhaften Ausgestaltungen verfügen die sphärischen Partikel über einen durchschnittlichen (mittleren) Durchmesser im Bereich von 55 µm bis 145 µm, vorzugsweise im Bereich von 60 µm bis 140 µm und besonders bevorzugt im Bereich von 65 µm bis 130 µm. Weiterhin ist in diesem Zusammenhang auch bevorzugt, wenn, alternativ oder zusätzlich, 50 Gew.-% der sphärischen Partikel über eine mittlere Partikelgröße bzw. über einen Durchmesser verfügen unterhalb von 150 µm, vorzugsweise unterhalb von 130 µm, beispielsweise auch unterhalb von 80 µm. Auch eine solche Beschichtungsstofibasis ist besonders geeignet, bei der 90 Gew. % der sphärischen Partikel einen Durchmesser kleiner oder gleich 500 µm, bevorzugt kleiner oder gleich 300 µm, besonders bevorzugt kleiner oder gleich 200 µm und insbesondere im Bereich von 1 µm bis 175 µm oder von 1 µm bis 110 µm oder von 55 µm bis 160 µm aufweisen.

Die sphärischen Partikel des Patentanspruchs 1 stellen Keramik-, Quarz-, Korund- oder Glaspartikel bzw. Keramik-, Quarz-, Korund- oder Glaskugeln dar. Selbstverständlich können auch Mischungen solcher sphärischen Partikel eingesetzt werden. Besonders bevorzugt wird auf Glaskugeln zurückgegriffen. Die sphärischen Partikel werden in massiver Form verwendet. Geeignete massive Glaskugeln umfassen zum Beispiel Kalk-Natron- wie auch Bor-Silikat-Gläser. Diese können auch im Gemisch eingesetzt werden.

Als geeignete silikatische Füllstoffe kommen Ringsilikate, Kettensilikate, Bandsilikate, Schichtsilikate, Gerüstsilikate, Inselsilikate, Gruppensilikate und/oder technische Silikate, insbesondere auf Aluminiumsilikatbasis, in Betracht. Besonders geeignet sind Schichtsilikate, Gerüstsilikate und/ oder technische Silikate. Selbstverständlich können auch beliebige Mischungen an den vorangehend genannten Silikattypen eingesetzt werden.

Als besonders geeignete silikatische Füllstoffe haben sich Aluminiumsilikate erwiesen. Exemplarisch seien als für die erfindungsgemäße Beschichtungsstoffbasis in Frage kommende silikatische Füllstoffe genannt Leucit, Nephelin, Sodalith, Nosean, Cancrinit, Glimmer, Analcim, Labradorit, Hyalophan, Celsian, Anorthit, Albit, Andesin, Oligoklas, Orthoklas, Zoisit, Vesuvian, Milarit, Eudialyt, Pyroxen, Xonotlit, Muskovit, Adular, Buddingtonit, Mikroklin, Monalbit, Calciumsilikat und Sanidin. Besonders bevorzugt wird auf Sodalith, Albit, Muskovit, Kaolin und/oder Calciumsilikat, zurückgegriffen.

In einer Ausgestaltung können in der Beschichtungsstoffbasis transparente silikatische Füllstoffe zum Einsatz kommen.

In einer weiteren Ausführungsform umfasst die Beschichtungsstoffbasis gemäß der vorliegenden Erfindung ferner mindestens einen kalzinierten Füllstoff, bevorzugt wasserfreie bzw. kalzinierte Aluminiumsilikate. Als besonders geeignet hat sich in diesem Zusammenhang wasserfreies Kaolin erwiesen. Ferner hat sich der Einsatz wasserfreier Aluminiumsilikate mit einem durchschnittlichen Durchmesser kleiner 15 µm, vorzugsweise kleiner 10 µm und insbesondere kleiner 7 µm als besonders zweckmäßig erwiesen. In einer Ausgestaltung können z.B. wasserfreie bzw. kalzinierte Aluminiumsilikate mit einem d50-Wert von 10 µm oder weniger oder sogar von 5 µm oder weniger eingesetzt werden, um zufriedenstellende Resultate zu erzielen.

Zusätzlich können auch weitere mineralische Füllstoffe in der erfindungsgemäßen Beschichtungsstoffbasis zugegen sein, beispielsweise Erdalkalioxide. In einer bevorzugten Ausgestaltung liegen in der erfindungsgemäßen Beschichtungsstoffbasis als Füllstoffe jedoch ausschließlich silikatische Füllstoffe vor.

Von besonderer Güte in Bezug auf die vorliegende Erfindung sind auch derartige Beschichtungsstoffbasen, die nur bis 30 Gew.-%, vorzugsweise nur bis 10 Gew.-% und besonders bevorzugt nur bis 5 Gew.-% an Carbonat-Füllstoffen enthalten. Hierbei ist eine Beschichtungsstoffbasis ohne Carbonat-Füllstoffe besonders bevorzugt. Es hat sich herausgestellt, dass sich bei Verwendung keiner oder nur sehr geringer Anteile an Carbonat-Füllstoffen in der erfindungsgemäßen Beschichtungsstoffbasis der Schreibeffekt sehr stark zurückdrängen, wenn nicht sogar eliminieren lässt, wenn gleichzeitig sphärische Partikel mit einem durchschnittlichen Durchmesser im Bereich von 50 µm bis 200 µm und Bindemittel umfassend Bindemittelpolymere sowie auch silikatische Füllstoffe zugegen sind.

Geeignete Bindemittel bzw. Bindemittelpolymere umfassen in einer vorteilhaften Ausführungsform mindestens ein Polysiloxanharz, insbesondere in Form einer Emulsion. Hierbei kann es sich zum Beispiel um Poly-(dialkylsiloxane) wie Poly(dimethylsiloxane) handeln.

In einer weiteren vorteilhaften Ausgestaltung werden, alternativ oder zusätzlich, als geeignete Bindemittel bzw. Bindemittelpolymere solche auf Basis der Monomere Carbonsäurevinylester mit 3 bis 20 C-Atomen, beispielsweise Vinylacetat und Vinylpropionat, N-Vinylpyrrolidon und dessen Derivate, Vinylaromaten, beispielsweise Styrol und deren Derivate, Vinylhalogeniden, ethylenisch ungesättigten Carbonsäuren, beispielsweise Acryl- und/oder Methacrylsäure, ethylenisch ungesättigten Carbonsäureestern, beispielsweise Acryl- und/oder Methacrylsäureester mit 1 bis 12 C-Atomen im Alkoholrest, ethylenisch ungesättigten Carbonsäureamiden oder ethylenisch ungesättigten Carbonsäureanhydriden eingesetzt, vorzugsweise in Form von Polymerdispersionen. Besonders bevorzugt wird hierbei auf Polymere und/oder Copolymere (nachfolgend auch kurz (Co)-Polymere genannt) auf (Meth)acrylatbasis, beispielsweise Acrylatbasis, zurückgegriffen. Bei (Co)-Polymeren auf (Meth)acrylatbasis soll es sich im Sinne der vorliegenden Erfindung um solche aus (Meth)acrylsäure und/oder (Meth)acrylsäureestem ((Meth)acrylaten) handeln. Unter dem Begriff (Meth)acrylat bzw. (Meth)acrylsäure werden im Sinne der Erfindung und im Einklang mit anerkannter Notation sowohl Methacrylate bzw. Methacrylsäure als auch Arylate bzw. Acrylsäure subsumiert. Bevorzugt wird auf Homopolymere der Acrylsäure und insbesondere auf Copolymere der Acrylsäure und deren Ester, insbesondere Alkylester, und/oder auf Homopolymere der Methacrylsäure und insbesondere Copolymere der Methacrylsäure und deren Ester und/oder Estern der Acrylsäure, insbesondere Alkylester, zurückgegriffen. Die genannten Copolymere der Acrylsäure mit Alkylacrylaten sind hierbei besonders bevorzugt. Besonders zweckmäßig ist somit der Einsatz von Copolymeren, die enthalten oder gebildet sind aus Methacrylsäure und/oder Acrylsäure und Estern der Methacrylsäure und/oder Estern der Acrylsäure. Unter den in diesem Abschnitt genannten Estern, insbesondere Alkylestern, sind die Methyl-, Ethyl, n-Propyl, i-Propyl, n-Butyl, i-Butyl-, t-Butyl, und/oder Hexylester, z.B. 2-Ethylhexylester, der (Meth)arcrylsäure, vorzugsweise der Acrylsäure, besonders geeignet. In diesem Zusammenhang sind solche Bindemittel bzw. Bindemittelpolymere besonders geeignet, die in Wasser nicht oder nur mäßig quellbar sind. In einer zweckmäßigen Ausgestaltung liegt das Bindemittel bzw. das Bindemittelpolymer oder eine Komponente des Bindemittels in Form einer Polymerdispersion, d.h. in Form einer wässrigen Dispersion vor. Hierbei sind wässrige Bindemitteldispersionen auf Basis von Acrylat-(co)-polymeren besonders geeignet. Daneben können auch wässrige Bindemitteldispersionen auf Basis von Vinylestern, z.B. Vinylacetat, Styrol, Styrolacrylaten, Butadien, Phenylacetylen und/oder Alkydharzsystemen sowie deren Copolymerisaten eingesetzt werden.

Beispielhaft seien als geeignete Bindemittel Alkylester der Acrylsäure und der Methacrylsäure Methylacrylat, Methylacrylat, Propylacrylat, Butylacrylat, 2-Ethylhexylacrylat, Methylmethacrylat, Ethylmethacrylat, Propylmethacrylat, n-Butylmethacrylat, t-Butylmethacrylat, iso-Butylmethacrylat, 2-Ethylhexylmethacrylat, Cyclohexylmethacrylat und Cyclohexylacrylat genannt. Diese Alkylester können selbstverständlich sowohl alleine als auch in Form einer Kombination von zwei oder mehreren Alkylestern verwendet werden. Zusätzlich oder anstelle können auch mit funktionellen Gruppen, beispielsweise mit Hydroxyl- oder mit Epoxygruppen funktionalisierte Alkylester der Acrylsäure und/oder der Methacrylsäure eingesetzt werden. Geeignete hydroxygruppenhaltige (Meth)acrylsäureester umfassen Hydroxymethylmethacrylat, Hydroxyethylacrylat, Hydroxypropylmethacrylat, Hydroxypropylacrylat, Hydroxybutylmethacrylat und Hydroxybutylacrylat. Diese Alkylester können sowohl alleine als auch in Kombination eingesetzt werden. Als epoxygruppenhaltige (Meth)acrylsäureester sei exemplarisch auf Glycidylmethacrylat und Glycidylacrylat verwiesen.

Zusätzlich können als Comonomere zu der Acrylsäure, der Methacrylsäure und/oder den Estern, insbesondere Alkylestern, der (Meth)acrylsäure weitere ungesättigte Monocarbonsäuren sowie deren Anhydride und/oder insbesondere ungesättigte Dicarbonsäuren eingesetzt werden. Als geeignete ungesättigte Dicarbonsäuren kommen zum Beispiel Maleinsäure, Fumarsäure, Itaconsäure und Citraconsäure sowie deren Halbester, beispielsweise mit C₁-C₁₂-Alkoholen in Betracht.

Die erfindungsgemäße Beschichtungsstoffbasis kann ferner in einer besonders geeigneten Ausführungsform mindestens einen Verdicker, mindestens ein, insbesondere silikonfreies, Entschäumungsmittel, mindestens einen Emulgator, mindestens ein Netzmittel, mindestens ein Konservierungsmittel, insbesondere Topf- und/oder Filmkonservierungsmittel, mindestens ein Hydrophobierungsmittel und/oder mindestens ein Dispergiermittel enthalten. Besonders geeignete Hydrophobierungsmittel stellen hierbei, insbesondere emulgatorfreie, Wachdispersionen dar. Besonders bevorzugt enthält die erfindungsgemäße Beschichtungsstoffbasis mindestens einen Verdicker, mindestens ein, insbesondere silikonfreies, Entschäumungsmittel, mindestens einen Emulgator, mindestens ein Netzmittel, mindestens ein Konservierungsmittel, insbesondere Topf-und/oder Filmkonservierungsmittel, mindestens ein Hydrophobierungsmittel und mindestens ein Dispergiermittel, beispielsweise mindestens einen Emulgator, mindestens ein Netzmittel, mindestens ein Konservierungsmittel, insbesondere Topf- und/oder Filmkonservierungsmittel, mindestens ein Hydrophobierungsmittel und mindestens ein Dispergiermittel. In einer weiteren bevorzugten Ausführungsform kann die erfindungsgemäße Beschichtungsstoffbasis, neben silikatischen Füllstoffen, sphärischen Partikeln mit einem durchschnittlichen Durchmesser im Bereich von 50 µm bis 200 µm und einem Bindemittel, umfassend Bindemittelpolymere, insbesondere in Form von Polymerdispersionen auf (Meth)acrylatbasis, insbesondere Acrylatbasis, ferner umfassen mindestens ein Verdickungsmittel, mindestens ein Pigment, insbesondere Titandioxid, mindestens einen Entschäumer, mindestens ein Topf- und Filmkonservierungsmittel und mindestens ein Hydrophobierungsmittel sowie gegebenenfalls mindestens einen Emulgator und/oder mindestens ein Dispergiermittel und/oder mindestens ein Filmbildehilfsmittel.

Die erfindungsgemäße Beschichtungsstoffbasis kann zudem mit mindestens einem Pigment ausgestattet sein. Geeignete Pigmente umfassen beispielsweise Titandioxid, Eisenoxid, Zinkoxid, Chromoxid, Kobaltoxide, Mischoxide des Kobalt und Aluminium, z.B. Kobaltblau, Phthalocyaninpigmente, Spinellpigmente, z.B. Spinnelle des Kobalt mit Nickel und Zink sowie Spinelle basierend auf Eisen und Chrom mit Kupfer, Zink und Mangan, Nickel- und Chromtitanat, Mangantitanrutil, Rutilmischphasenpigmente, Wismutvanadat, Ultramarinblau und Sulfide der seltenen Erden. Als geeignete Pigmente kommen auch Phthalocyanine, insbesondere Phthalocyaninblau, Diarylpigmente, Azopigmente, Chinacridonpigmente, Dioxazinpigmente, Perylenpigimente, Diketopyrollopyrrolpigmente sowie deren beliebige Mischungen in Frage. Als besonders geeignetes anorganisches Pigment sei Titandioxid genannt. Die erfindungsgemäße Beschichtungsstoffbasis zeichnet sich durch eine sehr gute Abtönbarkeit aus.

Als geeignete Verdicker sei exemplarisch auf Celluloseether, Guarkernmehle, Polycarboxylate, Polysaccharide und Polyurethanverdicker, z.B. hydrophobmodifizierte Urethane, und alkalilösliche Acrylatverdicker verwiesen.

Als geeignetes Hydrophobierungsmittel kann zum Beispiel auf eine, insbesondere emulgatorfreie, Wachsdispersion zurückgegriffen werden. In diesem Zusammenhang können als Hydrophobierungsmittel Wachse ausgewählt aus der Gruppe bestehend aus Polyethylen-, HDPE-, Paraffin-, Montan-, Camauba-, Amid-, PTFE-, PP- und Silikonwachse sowie deren Mischungen zum Einsatz kommen.

Geeignete Netzmittel stellen zum Beispiel nichtionische Tenside aus der Klasse der Alkylpolyethylenglykolether, der Fettsäureethoxylate, Alkylpolyglykoside, Sorbitanesterethoxylate, Alkindiolethoxylate, Ethylenoxid und Propylenoxid-Blockcopolymere sowie Additionsprodukte von Ethylenoxid und Propylenoxid an Alkohol, und Alkoholethoxylate oder Alkylphenolethoxylate dar.

Geeignete Emulgatoren sind zum Beispiel araliphatische und aliphatische nichtionische Emulgatoren, beispielsweise ethoxylierte Mono-, Di- und Trialkylphenole, zum Beispiel mit einem Ethoxylierungsgrad von 3 bis 50 und C₄-C₉-Alkylresten. Des Weiteren können auch anionische Emulgatoren zum Einsatz kommen.

Als Filmbildehilfsmittel kommen zum Beispiel Butylglykol, Butyldiglykol und Butyldipropylenglykol in Betracht.

In einer zweckmäßigen Ausgestaltung umfassen geeignete Topfkonservierungsmittel, also Konservierungsmittel, die die Lagerstabilität der Beschichtungsstoffbasis bzw. Farbe mit sicherstellen sollen, Formaldehyd und Formaldehyd-abspaltende Verbindungen wie Dihydroxy-2,5-dioxahexan, Chlormethylisothiazolinon, Benzylisothiazolinon, Benzimidazolinon und Bronopol. Als geeignete Filmkonservierungsmittel, welche regelmäßig den Befall von Anstrichen mit Pilzen und Algen verhindern sollen, eignen sich zum Beispiel Diuron, Carbendazim, Octylisothiazolinon, Dichlorooctylisothiazolinon, Zinkpyrithion und Irgarol.

Als geeignete Entschäumer können der erfindungsgemäßen Beschichtungsstoftbasis zum Beispiel Mineralölentschäumer, Silikonentschäumer oder Entschäumer auf Basis von Polyalkylenglykolethem zugesetzt werden.

Der Feststoffgehalt der erfindungsgemäßen Beschichtungsstoffbasis liegt üblicherweise im Bereich von 40 bis 80 Gew.-%, vorzugsweise im Bereich von 50 bis 75 Gew.-%, besonders bevorzugt im Bereich von 55 bis 70 Gew.-% und insbesondere im Bereich von 60 bis 68 Gew.-%.

Die der Erfindung zugrundeliegende Aufgabe wird des Weiteren gelöst durch eine, insbesondere matte, Fassaden- oder Anstrichfarbe, enthaltend die erfindungsgemäße Beschichtungsstoffbasis.

Die erfindungsgemäßen Fassaden- oder Anstrichfarben können im Grunde auf eine Vielzahl an Untergründen aufgetragen werden, exemplarisch seien Mauerwerke, Alt- und Neuputze, beispielsweise nach DIN EN9 98-1, tragfähige Fassadenfarben sowie Strukturputze auf Dispersionsbasis genannt.

Dabei sind solche Fassaden- oder Anstrichfarben besonders geeignet, deren PVK bei oder oberhalb von 30 % und vorzugsweise bei oder oberhalb von 50 % liegen. Selbst mit einem PVK bei oder oberhalb von 65 % oder gar bei oder oberhalb von 70 % stellen sich noch die erfindungsgemäßen Effekte ein.

PVK ist die Abkürzung für Pigment-Volumen-Konzentration. Hierbei handelt es sich im Grunde um die Angabe einer Packungsdichte. Die PVK wird häufig als Kennzahl zur Beschreibung von Farben und Lacken eingesetzt. Die Pigment-Volumen-Konzentration gibt das Volumenverhältnis zwischen Pigmenten, Füllstoffen und dem Bindemittel im ausgehärteten Farbanstrich wieder. Hierbei wird das aufsummierte Volumen der in der Formulierung enthaltenen Pigmente und Füllstoffe durch das Gesamtvolumen sämtlicher fester Rohstoffe dividiert. Je größer die PVK eingestellt wird, umso größer ist der Pigmentanteil. Dieses führt dazu, dass Pigment- und Füllstoffpartikel aus der Oberfläche hinausragen, wodurch sich ein mattes Erscheinungsbild einstellt bzw. ein solches Erscheinungsbild unterstützt wird. Mit den erfindungsgemäßen Anstrichfarben gelingt selbst bei sehr hohen PVK ein Zurückdrängen bzw. Unterbinden des sogenannten Schreibeffekts.

Die der Erfindung zugrundeliegende Aufgabe wird ferner gelöst durch einen, insbesondere matten, Farb- oder Fassadenanstrich, enthaltend oder erhalten mit der erfindungsgemäßen Fassaden- oder Anstrichfarbe. Für die Bestimmung des Vorliegens einer matten Anstrichfarbe bzw. eines matten Farbanstrichs kann auf die Norm DIN EN 13 300 zurückgegriffen werden, die die vier Glanzabstufungen glänzend, mittlerer Glanz, matt und stumpfmatt kennt. Unter matt im Sinne der vorliegenden Erfindung sollen gemäß einer zweckmäßigen Ausgestaltung die Glanzabstufungen "mittlerer Glanz", soweit hierin die Glanzgrade "seidenmatt" und "seidenglänzend" mit umfasst sind, sowie die Glanzabstufungen matt und stumpfmatt verstanden werden, wobei solche Anstrichfarben bzw. Farbanstriche mit den Glanzgraden matt und stumpfmatt bevorzugt sind.

Dabei sind solche Farb- oder Fassadenanstriche bevorzugt, bei denen der Glanzgrad (gemessen bei 85° nach DIN EN ISO 2813) kleiner 5, insbesondere kleiner 2, und/oder der Nassabrieb (bestimmt nach DIN ISO 11998 unter Mitverwendung von DIN EN ISO 13300) nach 10.000 Zyklen kleiner 30 µm, vorzugsweise kleiner 20 µm, und/oder die Pendelhärte (bestimmt gemäß DIN 53157) größer 40 sec, vorzugsweise größer 50 sec und insbesondere größer 60 sec, und/oder dass die Wasserdurchlässigkeitsrate (bestimmt nach DIN EN 1062-3) (W-Wert) kleiner 0,5 kg/(m² × √ h), vorzugsweise kleiner 0,2 kg/(m² x √ h), und/oder die Wasserdampfdurchlässigkeit (bestimmt nach DIN EN 7783-2) (sd-Wert) kleiner 1,5 m, insbesondere kleiner 1,0 m und besonders bevorzugt kleiner 0,5 m, und/oder bei denen die Differenz aus dem Glanzgrad vor der Nassabriebsprüfung und dem Glanzgrad nach der Nassabriebsprüfung (10.000 Zyklen) kleiner 8 oder kleiner 4, vorzugsweise kleiner 2,5 und besonders bevorzugt kleinerl ,5 und insbesondere kleiner 0,5, ist.

Der Glanzgrad wird gemäß DIN EN ISO 2813 bei einem Messwinkel von 85 ° bestimmt.

Mit der erfindungsgemäßen Beschichtungsstoffbasis lassen sich insbesondere matte Anstrichoberflächen mit hoher Brillanz erhalten.

Der vorliegenden Erfindung liegt die überraschende Erkenntnis zugrunde, dass mit Hilfe der erfindungsgemäßen Beschichtungsstoffbasis erstmalig Anstrichfarben, insbesondere Fassadenanstrichfarben, zugänglich werden, die nicht bzw. allenfalls sehr reduziert den sogenannten Schreibeffekt bei mechanischer Beanspruchung zeigen. Dieses gilt insbesondere auch für dunklere matte Fassadenanstrichfarben. Hierbei hat sich als besonders vorteilhaft erwiesen, dass sich der Effekt über die gesamte Palette an Farbtönen einstellt. Mit dem erfindungsgemäßen Beschichtungsstoffbasisformulierungen bzw. mit den erfindungsgemäßen Anstrichfarben lassen sich intensive, brillante Farbtöne, insbesondere auch dunkle Farbtöne erhalten, die keinen oder keinen maßgeblichen Abrieb mehr zeigen. Von Vorteil ist ferner, dass.sich mit den Zusammensetzungen der vorliegenden Erfindung das Pliänomen.des Verschleierns durch Kalkausblühungen zurückdrängen bzw. sogar vermeiden lässt. Die erfindungsgemäßen Farbanstriche zeichnen sich gegenüber herkömmlichen Farbanstrichen durch eine verbesserte mechanische Stabilität und Abriebfestigkeit aus. Das Phänomen des Aufpolierens bzw. der Glanzzunahme nach dem Reiben oder Scheuern tritt nicht mehr bzw. nicht mehr in nennenswertem Umfang auf. Von weiterem Vorteil ist, dass die mit den erfindungsgemäßen Beschichtungsbasisformulierungen zugänglichen Anstrichfarben nur noch eine geringe Wasseraufnahme zeigen. Des Weiteren hat sich als sehr vorteilhaft erwiesen, dass die erfindungsgemäßen Farbanstriche nicht oder nur noch in sehr eingeschränktem Umfang sogenannte Emulgatorläufer zeigen.

Die Erfindung wird anhand eines Beispiels nachfolgend erläutert.

Es wurden zwei nicht erfindungsgemäße und eine erfindungsgemäße Anstrichfarbe auf gleiche Art und Weise hergestellt. Die Zusammensetzungen dieser Rezepturen waren wie folgt:

| **Inhaltsstoffe** | **Zusammensetzung I** | **Zusammensetzung II** | **Zusammensetzung III (erfindungsgemäß)** |
|---|---|---|---|
| Wasser | 14,50 % | 24,85 % | 14,15 % |
| Verdickungsmittel | 1,00 % | 0,90 % | 1,35 % |
| Titandioxid | 0,00 % | 5.00 % | 0,00 % |
| Silikatische Füllstoffe | 10,00 % | 8,00 % | 25,00 % |
| Carbonat-Füllstoffe | 40,00 % | 41,00 % | 0,00 % |
| Massive Glaskugeln mit durchschnittlichem Durchmesser von ca. 120 µm | 0,00 % | 0,00 % | 20,00 % |
| Dispersion (50 gew.-%-ige wässrige Dispersion) | 30,00 % | 17,00 % | 30,00 % |
| Additive (Entschäumer, Filmbildehilfsmittel, Dispergiermittel) | 2,50 % | 2,55 % | 4,30 % |
| Topf- und Filmkonservierungsmittel | 1,00 % | 0,30 % | 1,20 % |
| Hydrophobierungsmittel | 1,00 % | 0,40 % | 4,00 % |
| PVK | ca. 55 | ca. 71 | ca. 54 |
| Glanz 85 ° | <5 | <5 | <5 |

Der Nassabrieb wurde in Anlehnung an DIN EN 13300 vorgenommen sowie geprüft nach DIN ISO 11998. Anders als in der Norm DIN EN 13300 vorgesehen, wurden 10.000 Hubzyklen durchgeführt. Der Glanzgrad wurde bei 85° gemäß DIN EN ISO 2813 bestimmt.

Die gemäß DIN EN 1062-3 bestimmte Wasserdurchlässigkeitsrate (W-Wert) lag für die erfindungsgemäße Rezeptur unterhalb von 0,1 kg/(m² x √h). Die Wasserdampfdurchlässigkeit (bestimmt nach DIN EN 7783-2) für die mit der erfindungsgemäßen Zusammensetzung erhaltene Anstrichfarbe (sd-Wert) war kleiner 0,5 m. Während für einen Farbanstrich mit der Zusammensetzung I eine Pendelhärte bestimmt gemäß DIN 53157 von 20 sec bestimmt wurde, lag die Pendelhärte für einen Farbanstrich mit der erfindungsgemäßen Zusammensetzung bei 70 sec.

Der Glanzgrad bei 85° von auf gleiche Art und Weise aus den Zusammensetzungen I, II und III erhaltenen Farbanstrichen wurde nach DIN EN ISO 2813 sowohl vor als auch nach der Nassabriebsprüfung (10.000 Hubzyklen) bestimmt. Hierbei ergaben sich die folgenden Werte:

| **Zusammensetzung** | **Glanz 85° vor Nassabrieb** | **Glanz 85° nach Nassabrieb** |
|---|---|---|
| **I** | 0,7 | 3,4 |
| **II** | 1,7 | 10,2 |
| **III** | 0,5 | 0,7 |

Wie die experimentellen Ergebnisse zeigen, lässt sich der sogenannte Schreibeffekt dann besonders wirksam zurückdrängen, wenn in den erfindungsgemäßen Zusammensetzungen neben sphärischen Partikeln mit einem durchschnittlichen Durchmesser im Bereich von 50 µm bis 200 µm, silikatische Füllstoffe zugegen sind und man zudem auf Carbonat-Füllstoffe verzichtet. Mit den erfindungsgemäßen Beschichtungsstoffzusammensetzungen lassen sich sowohl sehr gut abtönbare weiße und transparente Oberflächen wie auch bunt pigmentierte, insbesondere farbintensive und brillante, strapazierfähige und matte Oberflächen erhalten. Diese sind insbesondere für Außenanwendungen sehr gut geeignet. Die erfindungsgemäße Beschichtungsstoffbasis kann demgemäß unpigmentiert, d.h. in der Regel weiß oder transparent sein, als auch werksseitig bzw. auf Abtönmaschinen pigmentierte Zusammensetzungen liefern.

Es hat sich zudem gezeigt, dass sich mit den erfindungsgemäßen Zusammensetzungen Farbanstriche erhalten lassen, die selbst bei sehr farbintensiven und brillanten Farbtönen gegenüber oberflächlichen Verletzungen unempfindlich sind.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Beschichtungsstoffbasis für eine, insbesondere matte, Fassaden- oder Anstrichfarbe, enthaltend Füllstoffe umfassend massive sphärische Partikel mit einem durchschnittlichen Durchmesser im Bereich von 50 µm bis 200 µm, ausgewählt aus der Gruppe bestehend aus Keramik-, Quarz-, Korund- und Glaspartikel oder deren Mischungen, und als weiteren Füllstoff mindestens einen silikatischen Füllstoff sowie Bindemittel, umfassend mindestens ein Bindemittelpolymer, wobei das Bindemittelpolymer mindestens einen Polysiloxanharz in einer Emulsion vorliegend oder mindestens ein (Co)-Polymer auf (Meth)arcrylatbasis in einer wässrigen Polymerdispersion vorliegend oder eine wässrige Bindemitteldispersion auf Basis von Vinylestern umfasst, wobei die Beschichtungsstoffbasis keine Carbonat-Füllstoffe oder nur bis 30 Gew.-% an Carbonat-Füllstoffen aufweist.

2. Beschichtungsstoffbasis nach Anspruch 1, **dadurch gekennzeichnet, dass** die Füllstoffe darin in einer Menge im Bereich von 55 bis 95 Gew.-%, vorzugsweise im Bereich von 60 bis 92 Gew.-% und insbesondere im Bereich von 63 bis 90 Gew.-%, und/oder dass darin Bindemittel im Bereich von 5 bis 45 Gew.-%, vorzugsweise 8 bis 40 Gew.-% und insbesondere im Bereich von 10 bis 30 Gew.-% vorliegen.

3. Beschichtungsstoffbasis nach Anspruch 1 oder 2, **dadurch gekennzeichnet, dass** die Partikel, insbesondere sphärischen Partikel, darin in einer Menge im Bereich von 5 bis 50 Gew.-%, vorzugsweise im Bereich von 10 bis 45 Gew.-% und insbesondere im Bereich von 15 bis 40 Gew.-%, und/oder dass die silikatischen Füllstoffe darin in einer Menge im Bereich von 5 bis 60 Gew.-%, vorzugsweise im Bereich von 10 bis 50 Gew.-% und insbesondere im Bereich von 15 bis 45 Gew.-%, vorliegen.

4. Beschichtungsstoffbasis nach einem der vorangehenden Ansprüche, **dadurch gekennzeichnet, dass** die Partikel, insbesondere sphärischen Partikel, einen durchschnittlichen Durchmesser im Bereich von 55 µm bis 145 µm, vorzugsweise im Bereich von 60 µm bis 140 µm, und insbesondere im Bereich von 65 µm bis 130 µm, aufweisen und/oder dass 90 Gew.-% der Partikel, insbesondere sphärischen Partikel einen Durchmesser kleiner oder gleich 500 µm, bevorzugt kleiner oder gleich 300 µm, besonders bevorzugt kleiner oder gleich 200 µm und insbesondere im Bereich von 1 µm bis 175 µm oder von 55 µm bis 160 µm, aufweisen.

5. Beschichtungsstoffbasis nach einem der vorangehenden Ansprüche, **dadurch gekennzeichnet, dass** die Partikel, Keramik-, Quarz-, Korund- oder Glaskugeln, insbesondere Glaskugeln, darstellen.

6. Beschichtungsstoffbasis nach einem der vorangehenden Ansprüche, **dadurch gekennzeichnet, dass** der silikatische Füllstoff Ringsilikate, Kettensilikate, Bandsilikate, Schichtsilikate, Gerüstsilikate, Inselsilikate, Gruppensilikate und/oder technische Silikate, insbesondere auf Aluminiumsilikatbasis, oder deren beliebige Mischung umfasst.

7. Beschichtungsstoffbasis nach einem der vorangehenden Ansprüche, dadurch gekenntzeichnet, dass der silikatische Füllstoff Leucit, Nephelin, Sodalith, Nosean, Cancrinit, Analcim, Labradorit, Hyalophan, Celsian, Anorthit, Albit, Andesin, Oligoklas, Orthoklas, Zoisit, Vesuvian, Milarit, Eudialyt, Pyroxen, Xonotlit, Muskovit, Adular, Buddingtonit, Mikroklin, Monalbit, Kaolin, Calciumsilikat und Sanidin, insbesondere Sodalith, Albit, Muskovit, Kaolin und Calciumsilikat, oder deren beliebige Mischung umfasst.

8. Beschichtungsstoffbasis nach einem der vorangehenden Ansprüche, **dadurch gekennzeichnet, dass** diese nur bis 10 Gew.-%, vorzugsweise nur bis 5 Gew.-%, an Carbonat-Füllstoffen aufweist.

9. Beschichtungsstoffbasis nach einem der vorangehenden Ansprüche, **dadurch gekennzeichnet, dass** das (Co)-Polymer auf (Meth)acrylatbasis ein (Co)-Polymer auf Acrylatbasis, insbesondere ein Acrylatcopolymer, darstellt.

10. Beschichtungsstoffbasis nach einem der vorangehenden Ansprüche, ferner enthaltend mindestens einen Emulgator, mindestens ein Netzmittel, mindestens ein Konservierungsmittel, insbesondere Topf- und/oder Filmkonservierungsmittel, mindestens ein Hydrophobierungsmittel und/oder mindestens ein Dispergiermittel.

11. Beschichtungsstoffbasis nach Anspruch 10, **dadurch gekennzeichnet, dass** das Hydrophobierungsmittel mindestens eine, insbesondere emulgatorfreie, Wachsdispersion umfasst.

12. Beschichtungsstoffbasis nach einem der vorangehenden Ansprüche, ferner umfassend mindestens ein Pigment, insbesondere Titandioxid.

13. Fassaden- oder Anstrichfärbe, insbesondere matte Fassaden- oder Anstrichfarbe, enthaltend die Beschichtungsstoffbasis gemäß einem der vorangehenden Ansprüche.

14. Fassaden- oder Anstrichfarbe nach Anspruch 13, **dadurch gekennzeichnet, dass** deren PVK bei oder oberhalb von 30 %, vorzugsweise bei oder oberhalb von 65 % und insbesondere bei oder oberhalb von 70 % liegt.

15. Farb- oder Fassadenanstrich, insbesondere matter Farb oder Fassadenanstrich, enthaltend oder erhalten mit der Fassaden- bzw. Anstrichfarbe gemäß Anspruch 13 oder 14.

16. Farb- oder Fassadenanstrich nach Anspruch 15, **dadurch gekennzeichnet, dass** dessen Glanzgrad (gemessen bei 85° nach DIN EN ISO 2813) kleiner 5, insbesondere kleiner 2, und/oder dass dessen Nassabrieb (bestimmt nach DIN ISO 11998 unter Mitverwendung von DIN EN ISO 13300) nach 10.000 Zyklen kleiner 30 µm, vorzugsweise kleiner 20 µm, und/oder dass dessen Pendelhärte (bestimmt gemäß DIN 53157) größer 40 sec, vorzugsweise größer 50 sec und insbesondere größer 60 sec, und/oder dass dessen Wasserdurchlässigkeitsrate (bestimmt nach DIN EN 1062-3) (W-Wert) kleiner 0,5 kg/(m² x √h), vorzugsweise kleiner 0,2. kg/(m² x √h), und/oder dass dessen Wasserdampfdurchlässigkeit (bestimmt nach DIN EN 7783-2) (sd-Wert) kleiner 1,5 m, insbesondere kleiner 1,0 m und besonders bevorzugt kleiner 0,5 m, und/oder dass die Differenz aus dem Glanzgrad vor der Nassabriebsprüfung und dem Glanzgrad nach der Nassabriebsprüfung (10.000 Zyklen) kleiner 8, vorzugsweise kleiner 2,5 und besonders bevorzugt kleiner 0,5, ist.

17. Verwendung der Beschichtungsstoffbasis nach einem der Ansprüche 1 bis 12 für den Einsatz als oder für die Herstellung einer Fassadenfarbe.

## Claims

1. A coating material base for a, in particular matte, facade paint or paint, containing fillers comprising solid spherical particles with an average diameter in the range of 50 µm to 200 µm, selected from the group consisting of ceramic, quartz, corundum and glass particles or mixtures thereof, and as an additional filler at least one siliceous filler, as well as binders, comprising at least one binder polymer, wherein the binder polymer comprises at least one polysiloxane resin present in an emulsion or at least one (meth)acrylate-based (co)polymer present in an aqueous polymer dispersion or an aqueous binder dispersion based on vinyl esters, wherein the coating material base does not include any carbonate fillers or includes only up to 30% by weight of carbonate fillers.

2. The coating material base according to Claim 1, **characterized in that** the fillers are present therein in a quantity in the range of 55 to 95% by weight, preferably in the range of 60 to 92% by weight and in particular in the range of 63 to 90% by weight, and/or that binders are present therein in the range of 5 to 45% by weight, preferably 8 to 40% by weight and in particular in the range of 10 to 30% by weight.

3. The coating material base according to Claim 1 or 2, **characterized in that** the particles, in particular spherical particles, are present therein in a quantity in the range of 5 to 50% by weight, preferably in the range of 10 to 45% by weight and in particular in the range of 15 to 40% by weight, and/or that the siliceous fillers are present therein in a quantity in the range of 5 to 60% by weight, preferably in the range of 10 to 50% by weight and in particular in the range of 15 to 45% by weight.

4. The coating material base according to any one of the preceding claims, **characterized in that** the particles, in particular spherical particles, have an average diameter in the range of 55 µm to 145 µm, preferably in the range of 60 µm to 140 µm, and in particular in the range of 65 µm to 130 µm, and/or that 90% by weight of the particles, in particular spherical particles, have a diameter less than or equal to 500 µm, preferably less than or equal to 300 µm, particularly preferably less than or equal to 200 µm and in particular in the range of 1 µm to 175 µm or of 55 µm to 160 µm.

5. The coating material base according to any one of the preceding claims, **characterized in that** the particles constitute ceramic, quartz, corundum or glass spheres, in particular glass spheres.

6. The coating material base according to any one of the preceding claims, **characterized in that** the siliceous filler comprises ring silicates, chain silicates, band silicates, sheet silicates, framework silicates, nesosilicates, group silicates and/or technical silicates, in particular based on aluminum silicate, or any mixture thereof.

7. The coating material base according to any one of the preceding claims, **characterized in that** the siliceous filler comprises leucite, nepheline, sodalite, nosean, cancrinite, analcime, labradorite, hyalophane, celsian, anorthite, albite, andesine, oligoclase, orthoclase, zoisite, vesuvianite, milarite, eudialyte, pyroxene, xonotlite, muscovite, adularite, buddingtonite, microcline, monalbite, kaolin, calcium silicate and sanidine, in particular sodalite, albite, muscovite, kaolin and calcium silicate, or any mixture thereof.

8. The coating material base according to any one of the preceding claims, **characterized in that** said coating material base includes only up to 10% by weight, preferably only up to 5% by weight, of carbonate fillers.

9. The coating material base according to any one of the preceding claims, **characterized in that** the (meth)acrylate-based (co)polymer constitutes an acrylate-based (co)polymer, in particular an acrylate copolymer.

10. The coating material base according to any one of the preceding claims, further containing at least one emulsifier, at least one wetting agent, at least one preservative, in particular a pot and/or film preservative, at least one hydrophobing agent and/or at least one dispersing agent.

11. The coating material base according to Claim 10, **characterized in that** the hydrophobing agent comprises at least one, in particular emulsifier-free, wax dispersion.

12. The coating material base according to any one of the preceding claims, further comprising at least one pigment, in particular titanium dioxide.

13. A facade paint or paint, in particular matte facade paint or paint, containing the coating material base according to any one of the preceding claims.

14. The facade paint or paint according to Claim 13, **characterized in that** the PVC thereof is 30% or above, preferably 65% or above and in particular 70% or above.

15. A paint or facade coating, in particular matte paint or facade coating, containing or obtained with the facade paint or paint according to Claim 13 or 14.

16. The paint or facade coating according to Claim 15, **characterized in that** the specular gloss thereof (measured at 85° in accordance with DIN EN ISO 2813) is less than 5, in particular less than 2, and/or that the wet-scrub resistance thereof (determined in accordance with DIN ISO 11998 using DIN EN ISO 13300) following 10,000 cycles is less than 30 µm, preferably less than 20 µm, and/or that the pendulum hardness thereof (determined in accordance with DIN 53157) is greater than 40 sec, preferably greater than 50 sec and in particular greater than 60 sec, and/or that the water permeability rate thereof (determined in accordance with DIN EN 1062-3) (W value) is less than 0.5 kg/(m2 x √h), preferably less than 0.2 kg/(m² x √h), and/or that the water vapor permeability thereof (determined in accordance with DIN EN 7783-2) (sd value) is less than 1.5 m, in particular less than 1.0 m and particularly preferably less than 0.5 m, and/or that the difference between the specular gloss prior to the wet-scrub resistance test and the specular gloss following the wet-scrub resistance test (10,000 cycles) is less than 8, preferably less than 2.5 and particularly preferably less than 0.5.

17. Use of the coating material base according to any one of Claims 1 to 12 for the application as or for the manufacture of a facade paint.

## Revendications

1. Base de revêtement pour une peinture ou une peinture pour façade, notamment mate, contenant des charges comprenant des particules sphériques massives ayant un diamètre moyen compris entre 50 µm et 200 µm, sélectionnées dans le groupe composé de particules de céramique, quartz, corindon et verre ou de mélanges de celles-ci, et comme autre charge au moins une charge silicate, ainsi que liants, comprenant au moins un polymère liant, le polymère liant comprenant au moins une résine polysiloxane présentée dans une émulsion ou au moins un (co)polymère à base (méth)acrylate présenté dans une dispersion aqueuse de polymère ou une dispersion aqueuse de liant à base d'esters de vinyle, la base de revêtement ne présentant aucune charge carbonate, ou seulement jusqu'à 30 % en poids de charges carbonate.

2. Base de revêtement selon la revendication 1, **caractérisée en ce que** les charges y sont présentées dans une teneur comprise entre 55 et 95 % en poids, préférentiellement entre 60 et 92 % en poids et en particulier entre 63 et 90 % en poids, et/ou **en ce que** des liants y sont présentés entre 5 et 45 % en poids, préférentiellement entre 8 et 40 % en poids et en particulier entre 10 et 30 % en poids.

3. Base de revêtement selon la revendication 1 ou 2, **caractérisée en ce que** les particules, en particulier les particules sphériques, y sont présentées dans une teneur comprise entre 5 et 50 % en poids, préférentiellement entre 10 et 45 % en poids et en particulier entre 15 et 40 % en poids, et/ou **en ce que** les charges silicates y sont présentées dans une teneur comprise entre 5 et 60 % en poids, préférentiellement entre 10 et 50 % en poids et en particulier entre 15 et 45 % en poids.

4. Base de revêtement selon l'une des revendications précédentes, **caractérisée en ce que** les particules, en particulier les particules sphériques, présentent un diamètre moyen compris entre 55 µm et 145 µm, préférentiellement entre 60 µm et 140 µm, et en particulier entre 65 µm et 130 µm, et/ou **en ce que** 90 % en poids des particules, en particulier des particules sphériques, présentent un diamètre inférieur ou égal à 500 µm, préférentiellement inférieur ou égal à 300 µm, plus préférentiellement inférieur ou égal à 200 µm, et en particulier compris entre 1 µm et 175 µm ou entre 55 µm et 160 µm.

5. Base de revêtement selon l'une des revendications précédentes, **caractérisée en ce que** les particules représentent des billes de céramique, quartz, corindon ou verre, en particulier des billes de verre.

6. Base de revêtement selon l'une des revendications précédentes, **caractérisée en ce que** la charge silicate comprend des cyclosilicates, inosilicates en chaînes, inosilicates en rubans, phyllosilicates, tectosilicates, nésosilicates, sorosilicates et/ou des silicates techniques, en particulier à base de silicate d'aluminium, ou un mélange quelconque de ceux-ci.

7. Base de revêtement selon l'une des revendications précédentes, **caractérisée en ce que** la charge silicate comprend leucite, néphéline, sodalite, noséane, cancrinite, anal cime, labradorite, hyalophane, celsiane, anorthite, albite, andésine, oligoclase, orthoclase, zoïsite, vésuviane, milarite, eudialyte, pyroxène, xonotlite, muscovite, adulaire, buddingtonite, microcline, monalbite, kaolin, silicate de calcium et sanidine, en particulier sodalite, albite, muscovite, kaolin et silicate de calcium, ou un mélange quelconque de ceux-ci.

8. Base de revêtement selon l'une des revendications précédentes, **caractérisée en ce que** celle-ci présente seulement jusqu'à 10 % en poids, préférentiellement seulement jusqu'à 5 % en poids de charges carbonate.

9. Base de revêtement selon l'une des revendications précédentes, **caractérisée en ce que** le (co)polymère à base (méth)acrylate représente un (co)polymère à base acrylate, en particulier un copolymère acrylate.

10. Base de revêtement selon l'une des revendications précédentes, contenant en outre au moins un émulsifiant, au moins un réticulant, au moins un conservateur, en particulier un conservateur en pot et/ou un conservateur de film, au moins un agent hydrofuge et/ou au moins un agent dispersant.

11. Base de revêtement selon la revendication 10, **caractérisée en ce que** l'agent hydrofuge comprend au moins une dispersion de cire, en particulier exempte d'émulsifiant.

12. Base de revêtement selon l'une des revendications précédentes, comprenant en outre au moins un pigment, en particulier du dioxyde de titane.

13. Peinture ou peinture pour façade, en particulier peinture ou peinture pour façade mate, contenant la base de revêtement selon l'une des revendications précédentes.

14. Peinture ou peinture pour façade selon la revendication 13, **caractérisée en ce que** sa concentration volumique en pigments est égale ou supérieure à 30 %, préférentiellement égale ou supérieure à 65 % et en particulier égale ou supérieure à 70 %.

15. Revêtement ou revêtement pour façade, en particulier revêtement ou revêtement pour façade mate, contenant la peinture ou peinture pour façade selon la revendication 13 ou 14, ou obtenue avec celle-ci.

16. Revêtement ou revêtement pour façade selon la revendication 15, **caractérisée en ce que** le degré de brillant de celle-ci (mesuré à 85° conformément à DIN EN ISO 2813) est inférieur à 5, en particulier inférieur à 2, et/ou **en ce que** l'abrasion humide de celle-ci (déterminé conformément à DIN ISO 11998 conjointement à DIN EN ISO 13300) après 10.000 cycles est inférieure à 30 µm, préférentiellement inférieure à 20 µm, et/ou **en ce que** la dureté au pendule de celle-ci (déterminée conformément à DIN 53157) est supérieure à 40 sec, avantageusement supérieure à 50 sec et préférentiellement supérieure à 60 sec, et/ou **en ce que** la perméabilité à l'eau de celle-ci (déterminée conformément à DIN EN 1062-3) (valeur W) est inférieure à 0,5 kg/(m² x √h), préférentiellement inférieure à 0,2 kg/(m² x √h), et/ou **en ce que** la perméabilité à la vapeur d'eau de celle-ci (déterminée conformément à DIN EN 7783-2) (valeur sd) est inférieure à 1,5 m, en particulier inférieure à 1,0 m et plus préférentiellement inférieure à 0,5 m, et/ou **en ce que** la différence entre le degré de brillant avant l'essai d'abrasion humide et le degré de brillant après l'essai d'abrasion humide (10.000 cycles) est inférieure à 8, préférentiellement inférieure à 2,5 et plus préférentiellement inférieure à 0,5.

17. Utilisation de la base de revêtement selon l'une des revendications 1 à 12 pour une mise en oeuvre en tant que peinture pour façade ou pour la fabrication d'une peinture pour façade.
